# EUROPÄISCHE PATENTSCHRIFT

(11) **EP 0 752 096 B1**
(45) Veröffentlichungstag und Bekanntmachung des Hinweises auf die Patenterteilung: **01.07.1998**
(21) Anmeldenummer: 94926053.3
(22) Anmeldetag: 15.09.1994
(51) Int. Cl.: G01N 15/06, G01N 1/22

(54) **VERFAHREN UND EINRICHTUNG ZUR BESTIMMUNG DER KONZENTRATION VON ORGANISCHEN SCHADSTOFFEN**
PROCESS AND DEVICE FOR MONITORING AND DETERMINING THE CONCENTRATION OF HARMFUL ORGANIC SUBSTANCES
PROCEDE ET DISPOSITIF PERMETTANT DE DETERMINER LA CONCENTRATION EN SUBSTANCES NOCIVES ORGANIQUES

(30) Priorität: 17.09.1993 AT 1888/93
(43) Veröffentlichungstag der Anmeldung: 08.01.1997
(73) Patentinhaber: AUSTRIAN ENERGY & ENVIRONMENT SGP/WAAGNER-BIRO GmbH, A-1211 Wien (AT)
(72) Erfinder: STEINER, Thomas, A-3002 Purkersdorf (AT); KAHR, Gerhard, A-2542 Kottingbrunn (AT)
(86) Internationale Anmeldenummer: AT9400129
(87) Internationale Veröffentlichungsnummer: WO9508106

(56) Entgegenhaltungen:
- EP-A- 0 471 174
- DE-A- 4 018 872

## Beschreibung

Die Erfindung betrifft ein Verfahren zur Überwachung und Bestimmung der Konzentration von organischen Schadstoffen, wie polychlorierten Verbindungen, insbesondere polychlorierte Dibenzo-p-dioxine und -furane in einem entstaubten Abgasstrom, beispielsweise am Kaminaustritt, durch Entnahme eines repräsentativen Teilstromes über eine Entnahmeleitung unter Beimischung eines Gases wie z. B. Luft- oder Stickstoff vor seiner Analyse und eine Einrichtung zur Durchführung des Verfahrens mit einer Entnahmeleitung und einem vor einer Absaugeeinrichtung vorgesehenen Feinstaubfilter.

Die EP-A1-390 042 offenbart keine Schadstoffmessung sondern eine Staubmessung, bei der nach einer Volumsbestimmung der Staubgehalt eines Abgasteilstromes nach einer Luftzumischung zur Taupunktsherabsetzung bestimmt wird. Ein Vergleich der Meßwerte ist nicht möglich, da keine Messung oder Beeinflussung der Temperatur geoffenbart ist. Zur Verhinderung der Verlegung der Meßleitung sind Ausblasevorrichtungen vorgesehen, die die Meßeinrichtung verkomplizieren und bei einer Schadstoffbestimmung den Schadstoffgehalt beispielsweise durch Oxidation vor seiner Messung verändern können.

Aus der DE-A1-31 36 646 sind Schadstoffmessungen im Reingas nach der "Verdünnungsluftmethode" bei Mischtemperaturen von unter 40° C bekannt, wobei die Summe aus abgesaugter Abgasmenge und Kühlluft in einem ersten Gaszähler und die zugesetzte Kühlluftmenge in einem zweiten Gaszähler gemessen werden. Aus der Differenz der gemessenen Gasmengen wird das Probegasvolumen bestimmt. Da aber jede einzelne Messung fehlerbehaftet ist, ist das errechnete Probegasvolumen von der Meßungenauigkeit von sechs Einzelmeßwerten abhängig. Da jeweils Druck, Temperatur und Volumen gemessen und dann die Differenz gebildet wird, wirkt sich die Meßungenauigkeit besonders aus. Eine Konstanthaltung der Probegasbedingungen (Schadstoffgehalt) bis unmittelbar vor die Gaseinmischung und Abscheidung ist nicht geoffenbart.

Die Erfindung hat es sich zur Aufgabe gestellt, die Genauigkeit der Schadstoffmessung zu erhöhen, indem einerseits die Stelle der Gaseinmischung und der Schadstoffabscheidung möglichst zusammengelegt, die Zahl der Regelgrößen verringert, sowie der Regelmechanismus vereinfacht wurden. Durch die Erhöhung der Mischtemperatur auf Werte über 40° C gegenüber dem Stand der Technik kann ein Teil der aufwendigen Mischgasvorbereitung, insbesondere der Kühlteil derselben einfacher gestaltet werden.

Die Erfindung ist dadurch gekennzeichnet, daß sowohl die Mischtemperatur als auch der Feuchtigkeitsgehalt des Abgasteilstromes durch Einmischung des Gases unmittelbar vor der Schadstoffabscheidung ohne Veränderung der Inhaltsstoffe geregelt wird und daß die Entnahme des Teilstromes geschwindigkeitsgleich und die Abscheidung der Schadstoffe bei Temperaturen zwischen 40° und 100° C, vorzugsweise 40° bis 60° C in einem Feinstaubfilter erfolgt. Ausgestaltungen des Verfahrens sind in den Unteransprüchen 2 - 7 angegeben.

Die erfindungsgemäße Einrichtung ist zur Durchführung des Verfahrens dadurch gekennzeichnet, daß eine Steuereinrichtung für die geschwindigkeitsgleiche Entnahme und eine Temperatur- und durchflußgeregelte Zuführung eines Gases zu einer Mischeinrichtung sowie eine Meßeinrichtung für die abgesaugte Gasmischung mit Volumen-, Temperatur-, Druck- und Sauerstoffmessung nach dem Feinstaubfilter vorgesehen sind.

Die erfindungsgemäße Meßanordnung ist in der angeschlossenen Zeichnung beispielsweise und schematisch dargestellt, anhand der auch die Verfahrensschritte näher erklärt werden.

Aus einer Abgasleitung 10 wird ein Teilstrom über eine mit einer Heizeinrichtung 5 zur Konstanthaltung der Gastemperatur versehenen Entnahmeleitung 11 zur Überwachung des Schadstoffaustoßes durch ein Absauggebläse 2 abgesaugt. Die Entnahmeleitung 11 ist zur Vermeidung von Schadstoffkondensation und damit zur Gewährleistung der richtigen Meßergebnisse beheizt, sodaß der Abgasteilstrom mit konstanter Temperatur zu einer Mischeinrichtung 8 gebracht wird. In unmittelbarer Nähe ist ein Feinstaubfilter 1 zur Abweichung und Sammlung der Schadstoffe angeordnet. Die Mischeinrichtung 8 dient einerseits zur Regelung der Mischtemperatur bzw. des Feuchtigkeitsgehaltes vor dem Filter und andererseits zur Überwachung der geschwindigkeitsgleichen bzw. isokinetischen Entnahme aus der Abgasleitung 10. Zu diesem Zweck ist eine Steuereinrichtung 3 vorgesehen, die die geschwindigkeitsgleiche Entnahme steuert in dem bei gegebener Drehzahl des Absauggebläses 2 ein Gas 4 der Mischeinrichtung zugeführt wird. Die Steuereinrichtung 3 kann aus einem U-Rohrmanometer bestehen, dessen beide Schenkel an der Entnahmeleitung vor der Mischeinrichtung angeschlossen sind, wobei ein Schenkel gegebenenfalls auch in die Abgasleitung 10 reicht. Hiedurch wird eine Differenzdruckmessung der statischen Drücke zwischen Abgasleitung 10 und Entnahmeleitung 11 erreicht, die durch die Veränderung des vom Absauggebläse 2 gesaugten Volumens auf einem Sollwert gehalten wird. Dieser Sollwert regelt über eine Durchflußregelung 7 das Volumen des zugeführten Gasstromes.

Für die Zumischung des Gases bietet sich als Gas Luft an. Da aber ein zu hoher Sauerstoffgehalt im Mischgas, insbesondere bei höheren Temperaturen den zu messenden Schadstoff oxidieren kann, wird bevorzugt an Sauerstoff abgereicherte Luft oder Stickstoff bzw. Kohlendioxid als Kühlgas für die Zumischung verwendet, womit sich der Vorteil ergibt, daß der Stickstoff infolge seiner tieferen Temperatur als Flaschengas gegenüber Luft das Abgas bei vorgegebenen Temperaturen weniger verdünnt. Das Volumen des eingemischten Gases wird so in den Grenzen von 0,4 bis 7-fachen des abgesaugten Teilgasstromes gehalten. Entsprechend der Temperatur im Feinstaubfilter 1 wird die Temperatur des zugemischten Gasstromes so geregelt, daß die Mischtemperatur zwischen 40 und 100 insbesondere 60° C gehalten wird. Hiebei zeigt es sich, daß die Ab- bzw. Adsorption der Schadstoffe im Feinstaubfilter 1, insbesondere bei der Ausführung als Polyurethanschaumfilter, bei 50 - 60° C einen optimalen Wert aufweist. Die höhere Mischtemperatur führt zu einer Verringerung der Verdünnung und zu einem relativ mit Schadstoff konzentrierten Gasstrom, sodaß der Abscheidegrad der Schadstoffe im Feinstaubfilter 1 und die Genauigkeit der Schadstoffmessung erhöht wird. Das Feinstaubfilter 1 wird in den meisten Fällen mehrstufig ausgebildet, wobei mindestens eine, vorzugsweise die letzte Stufe, als Polyurethanschaumfilter ausgebildet ist. Das den Filter verlassende Abgasvolumen wird in einer nachgeschalteten Meßeinrichtung 6 mit seinen Parametern gemessen, wobei neben dem Volumen auch dessen Temperatur, Druck- sowie Sauerstoffgehalt gemessen wird. Die Messung des Sauerstoffgehaltes ist wesentlich, da nach den gesetzlichen Bestimmungen der Schadstoffgehalt im Abgas auf z. B. 11 % Sauerstoff aus Vergleichsgründen angegeben wird. Durch die Vermeidung der Differenzbildung zweier Volumina und durch die Reduzierung der zu bestimmenden Meßwerte erhöht sich die Genauigkeit des Rechenwertes um einen Faktur zwischen 2 und 5 je nach Genauigkeit der verwendeten Meßgeräte.

Alternativ zur Druckmessung ist vor und nach der Mischein richtung 8 in der Entnahmeleitung 11 eine Temperaturmeßeinrichtung vorgesehen, bei welcher durch Differenzbildung und Gasvolumensmessung 9 bzw. 9,' vorzugsweise des eingesaugten Gases oder des abgesaugten Abgas-Luft-Gemisches zusammen mit dem Schadstoffgehalt des Filters 1 die Gesamtemission in der Abgasleitung 10 rechnerisch ermittelt wird. Dieses Verfahren wird durch die Temperaturmessung und Annahme der Konstanz des Luftdruckes und der Temperatur des eingesaugten Gases sehr vereinfacht, ohne daß der errechnete Meßwert verfälscht wird.

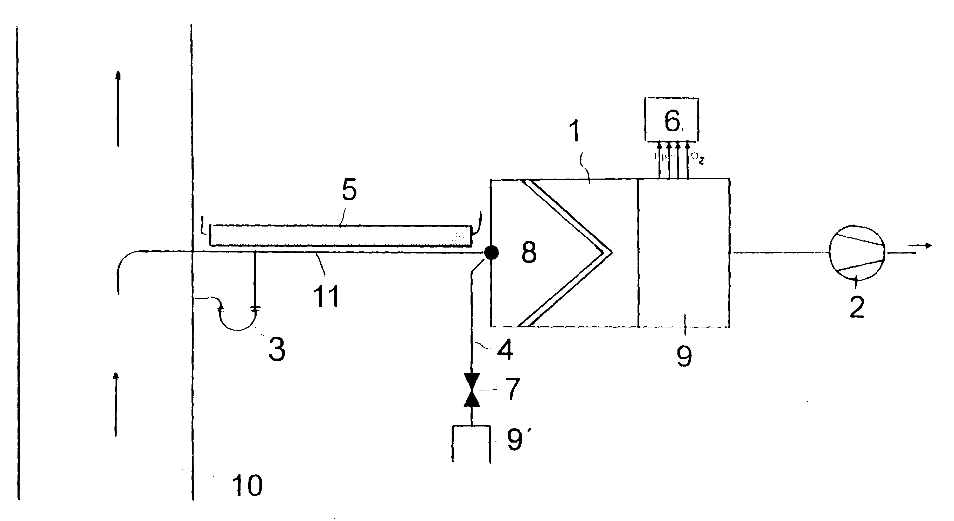

## Patentansprüche

1. Verfahren zur Überwachung und Bestimmung der Konzentration von organischen Schadstoffen, wie polychlorierten Verbindungen, insbesondere von polychlorierten Dibenzo-p-dioxinen und -furanen in einem entstaubten Abgasstrom, beispielsweise am Kaminaustritt, durch Entnahme eines repräsentativen Teilstromes über eine Entnahmeleitung unter Beimischung eines Gases, wie Luft oder Stickstoff, vor seiner Analyse, dadurch gekennzeichnet, daß sowohl die Mischtemperatur als auch der Feuchtigkeitsgehalt des Abgasteilstromes durch Einmischung des Gases unmittelbar vor der Schadstoffabscheidung ohne Veränderung der Inhaltsstoffe geregelt wird und daß die Entnahme des Teilstromes geschwindigkeitsgleich und die Abscheidung der Schadstoffe bei Temperaturen zwischen 40° und 100° C, vorzugsweise, 40° bis 60° C, in einem Feinstaubfilter erfolgt.

2. Verfahren nach Anspruch 1, dadurch gekennzeichnet, daß die Entnahme des Teilstromes aus dem Gasstrom aufgrund einer geregelten Druckdifferenz im Bereich der Entnahmestelle erfolgt.

3. Verfahren nach Anspruch 1, dadurch gekennzeichnet, daß die Abscheidung der Schadstoffe mehrstufig erfolgt, wobei in mindestens einer Stufe, insbesondere in der letzten Stufe, ein Polyurethanschaumfilter verwendet wird.

4. Verfahren nach Anspruch 1, dadurch gekennzeichnet, daß die Parameter Volumen, Temperatur, Druck und Sauerstoffgehalt des durch die Abscheideeinrichtung geführten Abgasteilstroms erfaßt werden.

5. Verfahren nach Anspruch 1, dadurch gekennzeichnet, daß das Volumen des eingemischten Gases auf das 0,4 bis 7-fache des Volumens des abgesaugten Teilgasstromes eingeregelt wird.

6. Verfahren nach Anspruch 5, dadurch gekennzeichnet, daß das Volumen des eingemischten Gases in Abhängigkeit der Temperatur des Mischgases in der Abscheideeinrichtung geregelt wird.

7. Verfahren nach mindestens einem der Ansprüche 1 - 6, dadurch gekennzeichnet, daß der Temperaturwert des Abgasteilstromes vor der Gasbeimischung durch Beheizung konstant gehalten und der Meßwert der Temperatur des Abgasstromes als Meßgröße für die Regelung der Temperatur des Abgasstromes nach der Mischung herangezogen wird.

8. Einrichtung zur Durchführung des Verfahrens mit einer Entnahmeleitung und einem vor einer Absaugeeinrichtung vorgesehenen Feinstaubfilter nach mindestens einem der Ansprüche 1 - 7, dadurch gekennzeichnet, daß eine Steuereinrichtung (3) für die geschwindigkeitsgleiche Entnahme und eine temperatur- und durchflußgeregelte Zuführung eines Gases (4) zu einer Mischeinrichtung (8) sowie eine Meßeinrichtung (6) für die abgesaugte Gasmischung mit Volumen-, Temperatur-, Druck- und Sauerstoffmessung nach dem Feinstaubfilter (1) vorgesehen sind.

## Claims

1. Process for monitoring and determining the concentration of organic pollutants such as polychlorinated composites, in particular polychlorinated dibenzo-p-dioxines and -furanes in a waste-gas flow freed from dust, for example at the chimney outlet, by extracting a representative flow portion via an extraction pipe whilst adding a gas, such as air or nitrogen, prior to its analysis, **characterised in that** both the mix temperature and the moisture content of the waste gas flow portion is controlled by adding a gas directly prior to pollutant separation without changing the componsition, and extraction of the partial flow is carried out at the same speed and separation of the pollutants at temperatures between 40° and 100°C, preferably 40° to 60°, in a fine-dust filter.

2. Process according to Claim 1, **characterised in that** extraction of the flow portion from the gas flow is carried out based on a regulated pressure difference in the area of the point of extraction.

3. Process according to Claim 1, **characterised in that** separation of the pollutants is carried out in several stages, and a polyurethane foam filter is used in at least one stage, in particular in the last stage

4. Process according to Claim 1, **characterlsed in that** the parameters volume, temperature, pressure and oxygen content of the waste gas flow portion ducted through the separating device are detected.

5. Process according to Claim 1, **characterised in that** the volume of mixed-in gas is regulated to between 0.4 and 7 times the volume of the suctioned off partial gas flow.

6. Process according to Claim 5, **characterised in that** the volume of mixed in gas is regulated in dependence on the temperature of the mixed gas in the separating device.

7. Process according to at least one of Claims 1 - 6, **characterised in that** the temperature value of the waste gas flow prior to mixing in gas is kept constant by way of heating, and the measuring value of the temperature of the waste gas flow is utilised as a measuring value for regulating the temperature of the waste gas flow after mixing.

8. Device for carrying out the process, comprising an extraction pipe and a fine-dust filter provided upstream of a suction device according to at least one of Claims 1 - 7, **characterised in that** a control device (3) for extraction at same speed and a temperature and throughflow regulated delivery of a gas (4) to a mixing device (8) as well as a measuring device (6) for suctioned off gas mixture with volume, temperature, pressure and oxygen measuring is provided downstream of the fine-dust filter (1).

## Revendications

1. Procédé pour surveiller et déterminer la concentration de polluants organiques tels que des composés polychlorés, en particulier de dibenzo-p-dioxines et -furannes polychlorés, dans un courant de gaz d'échappement dépoussiéré, en particulier à la sortie d'une cheminée, par prélèvement d'un courant partiel représentatif via un conduit de prélèvement avec addition par mélange d'un gaz tel que de l'air ou de l'azote, avant son analyse, caractérisé en ce qu'on règle aussi bien la température de mélange que la teneur en humidité du courant partiel de gaz d'échappement par introduction du gaz immédiatement avant la séparation des polluants sans modification des constituants et en ce que le prélèvement du courant partiel a lieu à vitesse constante et la séparation des polluants a lieu à des températures entre 40° et 100°, de préférence entre 40° et 60°C, dans un filtre pour l'élimination des poussières fines.

2. Procédé selon la revendication 1, caractérisé en ce que le prélèvement du courant partiel hors du courant de gaz a lieu sur base d'une différence de pression réglée, dans la zone de l'endroit de prélèvement.

3. Procédé selon la revendication 1, caractérisé en ce que la séparation des polluants a lieu en plusieurs étapes, dans laquelle, dans au moins une étape, en particulier dans la dernière étape, on utilise un filtre en mousse de polyuréthanne.

4. Procédé selon la revendication 1, caractérisé en ce qu'on enregistre les paramètres de volume, de température, de pression et de teneur en oxygène du courant partiel de gaz d'échappement guidé à travers le mécanisme de séparation.

5. Procédé selon la revendication 1, caractérisé en ce qu'on règle le volume du gaz introduit par mélange pour qu'il représente de 0,4 à 7 fois le volume du courant de gaz partiel séparé par aspiration.

6. Procédé selon la revendication 5, caractérisé en ce qu'on règle le volume du gaz introduit par mélange en fonction de la température du gaz de mélange dans le mécanisme de séparation.

7. Procédé selon au moins une des revendications 1 à 6, caractérisé en ce qu'on maintient constante la valeur de température du courant partiel de gaz d'échappement avant l'addition du gaz par mélange, en recourant à un chauffage, et on se sert de la valeur de mesure de la température du courant de gaz d'échappement comme grandeur de mesure pour le réglage de la température du courant de gaz d'échappement après le mélange.

8. Mécanisme pour la mise en oeuvre du procédé, comprenant un conduit de prélèvement et un filtre pour l'élimination des poussières fines, prévu en amont d'un dispositif de séparation par aspiration, selon l'une quelconque des revendications 1 à 7, caractérisé en ce qu'on prévoit un mécanisme de commande (3) pour le prélèvement à vitesse constante et l'acheminement, réglé quant à sa température et à son débit, d'un gaz (4), à un mécanisme de mélange (8), ainsi qu'un mécanisme de mesure (6) pour le mélange de gaz séparé par aspiration comprenant un dispositif de mesure du volume, de la température, de la pression et de la teneur en oxygène, en aval du filtre (1) pour l'élimination des poussières fines.
